# EUROPÄISCHE PATENTANMELDUNG

(11) **EP 4 173 743 A1**
(43) Veröffentlichungstag der Anmeldung: **03.05.2023**
(21) Anmeldenummer: 21205563.6
(22) Anmeldetag: 29.10.2021
(51) Int. Cl.: B23B 5/36, B23B 1/00, B23F 5/16, B23B 27/12

(54) **VORRICHTUNG UND VERFAHREN ZUR BEARBEITUNG EINES WERKSTÜCKS**

(71) Anmelder: DVS Innovation GmbH, 37269 Eschwege Hessen (DE)
(72) Erfinder: Preis, Mario, 35287 Amöneburg (DE); Reinhardt, Jörg, 99826 Berka v. d. Hainich (DE)
(74) Vertreter: Weilnau, Carsten

(57) **Zusammenfassung**

Die vorliegende Erfindung betrifft eine Vorrichtung, ein Verfahren und ein Computerprogrammprodukt zur Bearbeitung, eines Werkstücks, wobei die Vorrichtung (1) folgendes umfasst:
- eine Werkzeugspindel (12) zur Aufnahme und drehbaren Lagerung eines spanabhebenden Bearbeitungswerkzeugs (30) um eine Werkzeugdrehachse (Z),
- eine Werkstückspindel (4) zur Aufnahme und drehbaren Lagerung eines rotationssymmetrischen Werkstücks (50) um eine Werkstückdrehachse (W),
- wobei die Werkzeugdrehachse (Z) unter einem vorgegebenen Achskreuzwinkel (Σ) relativ zur Werkstückdrehachse (W) ausrichtbar ist,
- eine mit der Werkzeugspindel (12) und der Werkstückspindel (4) gekoppelte Steuerung (70), welche dazu ausgestaltet ist, eine sich zumindest abschnittsweise tangential zur Werkzeugdrehachse (Z) erstreckende und um die Werkzeugdrehachse (Z) rotierende Schneide (31, 32) eines mittels der Werkzeugspindel (12) drehbar angetriebenen Bearbeitungswerkzeugs (30) mit einer sich um die Werkstückdrehachse (W) rotierenden Mantelfläche (51, 52, 53) des Werkstücks (50) spanabhebend in Eingriff zu bringen.

## Beschreibung

### Technisches Gebiet

Die vorliegende Erfindung betrifft eine Vorrichtung, ein Verfahren und ein Computerprogrammprodukt zur Bearbeitung, insbesondere zur spanabhebenden Bearbeitung eines Werkstücks, insbesondere einer Mantelfläche eines Werkstücks.

### Hintergrund

Zu den wichtigsten Fertigungsverfahren der Zerspanungstechnik zählt das spanabhebende Drehen. Hierbei rotiert das Werkstück um seine eigene Drehachse. Ein Bearbeitungswerkzeug, typischerweise in Form eines Drehmeißels fährt dabei eine am Werkstück zu erzeugende Kontur ab. Bei besonders harten Werkstücken, etwa im Bereich der Metallbearbeitung unterliegen derartige zerspanende Werkzeuge einem recht hohen Verschleiß. Dies bedingt einen vergleichsweise häufigen Wechsel des Bearbeitungswerkzeugs, der mit relativ hohen Stillstandzeiten einer entsprechenden Bearbeitungsvorrichtung, beispielsweise einer Drehmaschine, und mit entsprechenden Kosten für die Wiederherstellung oder Neubeschaffung solcher Bearbeitungswerkzeuge einhergeht.

Demgegenüber liegt der vorliegenden Erfindung die Aufgabe zugrunde, ein neuartiges Verfahren, eine Vorrichtung, ein Bearbeitungswerkzeug sowie ein Computerprogramm für den Betrieb einer solchen Vorrichtung und die Implementierung eines solchen Verfahrens bereitzustellen, bei welchen für die zerspanende Bearbeitung von Werkstücken die Werkzeugkosten gesenkt, die Lebensdauer von Werkzeugen verlängert und Stillstandzeiten einer spanabhebenden Bearbeitungsmaschine verkürzt werden können.

### Vorteilhafte Ausgestaltungen

Diese Aufgabe wird mit einer Vorrichtung zur spanabhebenden Bearbeitung eines Werkstücks, mit einem hierfür vorgesehenen Bearbeitungswerkzeug, mit einem Verfahren zur spanabhebenden Bearbeitung eines Werkstücks sowie mit einem zugehörigen Computerprogrammprodukt gemäß den Merkmalen der jeweils unabhängigen Patentansprüche gelöst. Vorteilhafte Ausgestaltungen sind dabei jeweils Gegenstand abhängiger Patentansprüche.

Insoweit ist nach einem ersten Aspekt eine Vorrichtung zur spanabhebenden Bearbeitung eines Werkstücks vorgesehen. Die Vorrichtung weist eine Werkzeugspindel zur Aufnahme und drehbaren Lagerung eines spanabhebenden Bearbeitungswerkzeugs auf. Die Werkzeugspindel kann dabei um eine Werkzeugdrehachse rotieren und demgemäß eine Werkzeugdrehachse definieren. Insbesondere kann ein von der Werkzeugspindel aufgenommenes Bearbeitungswerkzeug um die Werkzeugdrehachse rotierend angetrieben werden.

Die Vorrichtung weist ferner eine Werkstückspindel zur Aufnahme und drehbaren Lagerung eines rotationssymmetrischen Werkstücks um eine Werkstückdrehachse auf. Das Werkstück weist typischerweise eine Mantelfläche, beispielsweise eine innenliegende oder außenliegende Mantelfläche auf, die mittels des von der Werkzeugspindel aufgenommenen Bearbeitungswerkzeugs bearbeitbar, insbesondere spanabhebend bearbeitbar ist.

Die Werkstückspindel definiert typischerweise die Werkstückdrehachse wenn das Werkstück mittels der Werkstückspindel drehbar angetrieben wird. Die Vorrichtung ist derart ausgestaltet, dass die Werkzeugdrehachse unter einem vorgegebenen Achskreuzwinkel relativ zur Werkstückdrehachse ausrichtbar ist. Jene Ausrichtung ist insbesondere für die spanabhebenden Bearbeitung der rotierenden Mantelfläche des Werkstücks vorgesehen, wenn das ebenfalls rotierende Bearbeitungswerkzeug spanabhebend mit der rotierenden Mantelfläche des Werkstücks in Eingriff gebracht wird oder hiermit in Eingriff gelangt.

Die Vorrichtung weist ferner eine Steuerung auf, welche mit der Werkzeugspindel und mit der Werkstückspindel gekoppelt ist. Die Steuerung ist dazu ausgestaltet, eine sich zumindest abschnittsweise tangential zur Werkzeugdrehachse erstreckende und um die Werkzeugdrehachse rotierende Schneide des Bearbeitungswerkzeugs, welches mittels der Werkzeugspindel drehbar angetrieben wird, mit einer sich um die Werkstückdrehachse rotierenden Mantelfläche des Werkstücks spanabhebend in Eingriff zu bringen.

Typischerweise weist die Vorrichtung einen Spindelantrieb für die Werkstückspindel als auch einen Spindelantrieb für die Werkzeugspindel auf. Entsprechende Spindelantriebe können von der Steuerung angesteuert und dementsprechend kontrolliert werden. Die Steuerung kann somit die Drehzahlen der Werkstückspindel und der Werkzeugspindel bedarfsgerecht einstellen. Ferner ist zumindest die Werkstückspindel und/oder die Werkzeugspindel hinsichtlich ihrer entsprechenden Drehachse variabel ausrichtbar, um einen vorgegebenen Achskreuzwinkel zwischen der Werkzeugdrehachse und der Werkstückdrehachse einzustellen.

Typischerweise weist die Vorrichtung hierfür eine geeignete Positioniereinrichtung auf, mittels welcher die Position der Werkzeugspindel relativ zur Werkstückspindel bedarfsgerecht eingestellt werden kann als auch die Werkzeugdrehachse relativ zur Werkstückdrehachse ausrichtbar ist. Die Positioniereinrichtung kann insbesondere zur variablen und stufenlosen Einstellung von Position und Ausrichtung der Werkzeugspindel relativ zur Werkstückspindel ausgestaltet sein. Die entsprechende Positioniereinrichtung kann ferner mit der Steuerung gekoppelt sein und von der Steuerung geregelt, bzw. eingestellt werden. Die Steuerung kann somit dazu ausgestaltet sein, die Werkzeugspindel relativ zur Werkstückspindel zu positionieren und auszurichten.

Das in der Werkzeugspindel aufzunehmenden Bearbeitungswerkzeug zeichnet sich durch eine sich zumindest abschnittsweise tangential zur Werkzeugdrehachse erstreckende und um die Werkzeugdrehachse rotierende Schneide auf. Das Bearbeitungswerkzeug kann insbesondere einen mit der Werkzeugdrehachse zusammenfallenden oder parallel hierzu verlaufenden Schaft aufweisen. Mittels des Schafts ist das Bearbeitungswerkzeug lösbar an der Werkzeugspindel anordenbar, bzw. drehfest befestigbar.

Die Schneide des Bearbeitungswerkzeugs ist um einen Werkzeugradius radial von der Werkzeugdrehachse beabstandet angeordnet oder ausgebildet. Die Schneide des Bearbeitungswerkzeugs weist zudem eine gewisse Erstreckung in Tangentialrichtung in Bezug auf die Werkstückdrehachse, bzw. in Bezug auf den Schaft des Bearbeitungswerkzeugs auf.

Aufgrund eines eingestellten Achskreuzwinkels zwischen der Werkzeugdrehachse und der Werkstückdrehachse ergibt sich ein vergleichsweise kleiner wechselseitiger Bearbeitungsbereich auf der Mantelfläche und an der Schneide des Bearbeitungswerkzeugs. Durch ein Rotieren des Bearbeitungswerkzeugs um die Werkzeugdrehachse gelangen, anders als beim herkömmlichen drehenden spanabhebenden Bearbeiten von Werkstücken, unterschiedliche und in Umfangs- oder Tangentialrichtung benachbart aneinander angrenzende Bereiche oder Segmente der Schneide des Bearbeitungswerkzeugs mit der zu bearbeitenden und rotierenden Mantelfläche des Werkstücks sukzessive in Eingriff.

Dadurch dass das Bearbeitungswerkzeug eine definierte Erstreckung in Tangentialrichtung in Bezug auf die Werkzeugdrehachse aufweist und dadurch dass das Bearbeitungswerkzeug mit der rotierenden Mantelfläche in Eingriff stehend ebenfalls um seine Werkzeugdrehachse drehend angetrieben wird, kann die Schneide im Unterschied zu einem herkömmlichen Drehmeißel hinsichtlich ihrer effektiven Länge deutlich vergrößert werden. Die tangentiale Erstreckung der rotierenden Schneide sorgt schließlich dafür, dass immer nur ein Teilbereich der rotierenden Schneide mit der rotierenden Mantelfläche des Werkstücks spanabhebend in Eingriff steht.

Durch die Drehung des Bearbeitungswerkzeugs während der spanabhebenden Bearbeitung der Mantelfläche des Werkstücks können mechanische und auch thermische Belastungen auf Seiten des Bearbeitungswerkzeugs über die sich fortwährend, ggf. gleichförmig drehende und in Tangentialrichtung erstreckende Schneide vergleichsweise homogen verteilt werden. Die mechanische als auch thermische Beanspruchung des Bearbeitungswerkzeugs kann auf diese Art und Weise gesenkt und optimiert werden, was sich verlängernd auf die Lebensdauer des Werkzeugs und verkürzend auf die Stillstandzeiten der Bearbeitungsvorrichtung für einen Werkzeugwechsel auswirken kann.

Nach einer weiteren Ausgestaltung ist die Vorrichtung mit dem Bearbeitungswerkzeug ausgestattet. Das Bearbeitungswerkzeug ist lösbar an der Werkzeugspindel angeordnet.

Nach einer weiteren Ausgestaltung der Bearbeitungsvorrichtung weist das Bearbeitungswerkzeug eine ringförmige oder kreisförmige Schneide auf, deren gedachter Mittelpunkt mit der Werkzeugdrehachse zusammenfällt. Insbesondere kann die Schneide des Bearbeitungswerkzeugs im Wesentlichen zahnlos ausgestaltet sein. Das Bearbeitungswerkzeug kann eine ebene, d.h. erhebungsfreie ringförmige, bzw. kreisförmige Schneide aufweisen.

Insbesondere kann nach einer weiteren Ausgestaltung das Bearbeitungswerkzeug im Wesentlichen scheibenförmig ausgestaltet sein. Es kann ein oder mehrere Schneiden oder zumindest kreissegmentartige Schneidensegmente aufweisen, die jeweils eine gewisse Erstreckung in Umfangs- oder Tangentialrichtung in Bezug auf die Werkzeugdrehachse aufweisen.

Einzelne Schneidensegmente können dabei in Umfangsrichtung des Bearbeitungswerkzeugs aneinander angrenzen. Die Schneide kann insbesondere an einer Umfangskante des scheibenförmigen Bearbeitungswerkzeugs ausgestaltet sein. Typischerweise befindet sich die ring- oder kreisförmige Schneide an einem Außenumfang, insbesondere an einer außenliegende Kante des zum Beispiel scheibenförmigen Bearbeitungswerkzeugs.

Nach einer weiteren Ausgestaltung weist das Bearbeitungswerkzeug in Längsrichtung der Werkzeugdrehachse betrachtet eine erste Stirnfläche auf. Der Außenrand jener ersten Stirnfläche kann mit der ersten Schneide zusammenfallen. Insoweit kann ein Übergang des Außenumfangs oder einer außenliegenden Mantelfläche des Bearbeitungswerkzeugs in die erste Stirnfläche eine die erste Schneide bildende Umfangskante aufweisen oder bilden.

Nach einer weiteren Ausgestaltung weist das Bearbeitungswerkzeug in Längsrichtung der Werkzeugdrehachse betrachtet eine zweite Stirnfläche auf. Diese kann der ersten Stirnfläche abgewandt ausgerichtet sein. Der Außenrand der zweiten Stirnfläche kann dabei ähnlich wie der Außenrand der ersten Stirnfläche mit einer zweiten Schneide zusammenfallen. Das Bearbeitungswerkzeug kann insoweit zumindest eine erste als auch optional eine zweite Schneide aufweisen. Die erste Schneide kann hierbei an einer Umfangskante der ersten Stirnfläche des zum Beispiel scheibenförmigen Werkzeugs ausgestaltet sein. Die zweite Schneide kann an der zweiten Stirnfläche, typischerweise gegenüberliegend der ersten Stirnfläche mit der Umfangskante der zweiten Stirnfläche zusammenfallen oder von dieser im Wesentlichen gebildet werden.

Das Bereitstellen von einer ersten und von einer zweiten Schneide ermöglicht eine universelle Nutzung des Bearbeitungswerkzeugs. Insbesondere kann nach einem Verschleiß der ersten Schneide des Bearbeitungswerkzeugs die zweite Schneide des Bearbeitungswerkzeugs entsprechend genutzt werden. Die Lebensdauer des Bearbeitungswerkzeugs kann auf diese Art und Weise nochmals gesteigert werden.

Ferner ist denkbar, das Bearbeitungswerkzeug in zwei unterschiedlichen Positionen an der Werkzeugspindel lösbar zu befestigen, sodass in einer ersten Anordnung die erste Schneide mit der rotierenden Mantelfläche des Werkstücks in Eingriff gelangt und in einer zweiten Anordnung die zweite Schneide entsprechend mit der rotierenden Mantelfläche des Werkstücks spanabhebend in Eingriff gelangt.

Nach einer weiteren Ausgestaltung weist die erste Schneide ausgehend von der Werkstückdrehachse einen ersten Radius auf. Die zweite Schneide weist ausgehend von der Werkstückdrehachse einen zweiten Radius auf. Der erste Radius und der zweite Radius können dabei unterschiedlich oder im Wesentlichen gleich groß sein. Bei unterschiedlichen Radien von erster Schneide und zweiter Schneide ist es denkbar, dass das Bearbeitungswerkzeug eine zumindest abschnittsweise schräg zur Werkzeugdrehachse verlaufende Außenfläche zwischen der ersten Schneide und der zweiten Schneide aufweist. Jene Außenfläche kann beispielsweise konisch ausgestaltet sein.

Eine derart konische Ausgestaltung ermöglicht insbesondere die Implementierung eines vorgegebenen positiven oder negativen Freiwinkels bei der spanabhebenden Bearbeitung der rotierenden Mantelfläche des Werkstücks. Mit größer werdendem Freiwinkel zwischen der jeweils mit der rotierenden Mantelfläche in Eingriff stehenden Schneide und der Werkstückoberfläche kann die Reibung zwischen dem Bearbeitungswerkzeug und der zu bearbeitenden Mantelfläche des Werkstücks als auch der Freiflächenverschleiß des Bearbeitungswerkzeugs reduziert werden.

Ein entsprechender Freiwinkel kann aber auch dynamisch, etwa durch Einstellung eines vorgegebenen Achskreuzwinkels zwischen der Werkstückdrehachse und der Werkstückdrehachse eingestellt werden.

Nach einer weiteren Ausgestaltung der Vorrichtung ist die Schneide des Bearbeitungswerkzeugs in Bezug auf die Werkzeugdrehachse in Umfangsrichtung ununterbrochen ausgestaltet. Die Schneide, d.h. die erste Schneide und/oder die zweite Schneide können eine ununterbrochene Umfangskante bilden oder aufweisen, sodass bei der spanabhebenden Bearbeitung der rotierenden Mantelfläche des Werkstücks am Werkzeug vergleichsweise homogene Belastungen und ein reduzierter Wärmeeintrag in das Werkzeug erzielt werden können.

Nach einer weiteren Ausgestaltung weist die Schneide des Bearbeitungswerkzeugs in Umfangsrichtung betrachtet zumindest eine spanbrechende Kerbe oder Nut auf. Eine solche Nut kann als Vertiefung in der ansonsten kreis- oder ringförmigen Schneide gebildet sein. Die entsprechende Kerbe oder Nut sorgt dafür, dass die von der Mantelfläche des rotierenden Werkstücks abgetragene Späne eine gewisse Spanlänge nicht überschreiten. Gelangt die Kerbe oder Nut des Bearbeitungswerkzeugs mit der Mantelfläche des Werkstücks spanabhebend in Eingriff führt dies zwangsläufig zu einer Unterbrechung des von der Mantelfläche des Werkstücks abgetragenen oder abgeschnittenen Spans.

Nach einer weiteren Ausgestaltung kann sich die spanbrechende Kerbe oder Nut in Axialrichtung von der ersten Schneide durchgehend bis zur zweiten Schneide entlang dem Außenumfang des Bearbeitungswerkzeugs erstrecken. Die Kerbe oder Nut kann insoweit eine Längserstreckung oder Axialerstreckung aufweisen, die dem axialen Abstand zwischen der ersten Schneide und der zweiten Schneide im Wesentlichen entspricht. In Umfangsrichtung der kreisförmige Schneide können ein oder mehrere spanbrechende Kerben oder Nuten ausgebildet oder vorgesehen sein. Ist mehr als eine spanbrechende Kerbe oder Nut an der zumindest eine Schneide ausgebildet, so sind diese typischerweise in Umfangsrichtung der Schneide äquidistant zueinander angeordnet. Dies führt zu einer gleichmäßigen, bzw. stets gleichbleibenden Länge der von der Mantelfläche abgetragenen Späne.

Nach einer weiteren Ausführungsform ist die Steuerung dazu ausgestaltet, das Bearbeitungswerkzeug während seines drehenden und spanabhebenden Eingriffs mit der Mantelfläche des Werkstücks entlang einer Vorschubrichtung relativ zum sich drehenden Werkstück zu bewegen. Die Vorschubrichtung weist dabei eine Richtungskomponente auf, die sich parallel zur Werkstückdrehachse erstreckt. Ist die rotierende Mantelfläche des Werkstücks beispielsweise eine zylindrische Mantelfläche so erstreckt sich die Vorschubrichtung im Wesentlichen parallel zur Werkstückdrehachse. Insoweit kann während der spanabhebenden Bearbeitung des Werkstücks das Bearbeitungswerkzeug in Axialrichtung relativ zum Werkstück bewegt werden. Ein entsprechender axialer Vorschub kann mit konstanter aber auch mit veränderlicher Geschwindigkeit erfolgen.

Bei Ausgestaltungen, bei denen die zu bearbeitenden Mantelfläche des Werkstücks nicht zylindrisch sondern zum Beispiel konisch ausgestaltet ist, erstreckt sich die Vorschubrichtung im Wesentlichen parallel zur zu bearbeitenden Mantelfläche. Der Vorschub des Bearbeitungswerkzeugs kann dabei sowohl in Axialrichtung als auch entlang einer radialen Zustellrichtung erfolgen. Da die Bearbeitungsvorrichtung insbesondere computergesteuert implementiert ist kann eine nahezu beliebig vorgegebene rotationssymmetrische Kontur der rotierenden Mantelfläche des Werkstücks mit dem ebenfalls rotierenden Bearbeitungswerkzeug programmgesteuert abgefahren werden.

Eine entsprechende Kontur für die zu bearbeitende Mantelfläche kann in der Steuerung der Bearbeitungsvorrichtung hinterlegt sein, sodass das Bearbeitungswerkzeug entlang einer vorgegebenen Trajektorie in Bezug auf die Axialrichtung und Radialrichtung während der spanabhebenden Bearbeitung der Mantelfläche des Werkstücks in einer entsprechenden Vorschubrichtung bewegt werden kann.

Nach einer weiteren Ausführungsform ist die Steuerung dazu ausgestaltet, das Bearbeitungswerkzeug mit einer außenliegenden Mantelfläche des Werkstücks in Eingriff zu bringen und dabei die Werkstückspindel gegenläufig zur Werkzeugspindel rotierend anzutreiben. Die Schneide des Bearbeitungswerkzeugs befindet sich hierbei typischerweise an einer Außenkontur des zum Beispiel scheibenartigen Bearbeitungswerkzeugs. Der gegenläufige Antrieb von Werkstückspindel und Werkzeugspindel führt alsdann dazu, dass das Bearbeitungswerkzeug und das Werkstück zumindest im Hinblick auf ihre jeweiligen Drehachsen in Umfangsrichtung betrachtet vergleichsweise schlupffrei miteinander in Eingriff bringbar sind.

Es findet insoweit keine oder nur ein vergleichsweise geringe Schleif- oder Schneidwirkung des Bearbeitungswerkzeugs am Werkstück in Bezug auf die Drehachse des Werkstücks statt. Der Materialabtrag erfolgt vielmehr in Axialrichtung aufgrund des eingestellten Achskreuzwinkels und dem Axialvorschub des Bearbeitungswerkzeugs relativ zum Werkstück. Somit können die Reibung und der Materialverschleiß für das Werkzeug weiter reduziert werden.

Bei einer weiteren Implementierung oder Ausführungsform ist die Steuerung dazu ausgestaltet, das Bearbeitungswerkzeug mit einer innenliegenden Mantelfläche des Werkstücks in Eingriff zu bringen und dabei die Werkstückspindel gleichläufig zur Werkzeugspindel rotierend anzutreiben. Jene gleichläufige rotierende Bewegung von Bearbeitungswerkzeug und Werkstück hat ebenfalls eine möglichst geringe Reibung von Bearbeitungswerkzeug und Werkstück in Tangential- oder Umfangsrichtung der sich drehenden Komponenten zum Ziel. Auch hier erfolgt der Materialabtrag und das Zerspanen vorwiegend in Axialrichtung aufgrund des eingestellten Achskreuzwinkels zwischen der Werkzeugdrehachse und der Werkstückdrehachse.

Sowohl für eine innenliegende als auch für eine außenliegende Mantelfläche des Werkstücks kann in Bezug auf die Tangential- oder Umfangsrichtung der Mantelfläche ein quasi schlupffreier Eingriff mit dem Bearbeitungswerkzeug verwirklicht werden. Hierdurch können die Reibung und der Materialverschleiß für das Bearbeitungswerkzeug reduziert werden.

Nach einer weiteren Ausführungsform ist die rotierende Schneide des Bearbeitungswerkzeugs um einen Werkzeugradius von der Werkstückdrehachse entfernt. Ebenso ist die rotierende Mantelfläche des Werkstücks um einen Werkstückradius von der Werkstückdrehachse entfernt. Die Steuerung ist dazu ausgestaltet, die Werkstückspindel mit einer Werkstückdrehzahl rotierend anzutreiben. Die Steuerung ist ferner dazu ausgestaltet, die Werkzeugspindel mit einer Werkzeugdrehzahl rotierend anzutreiben. Das Verhältnis von Werkzeugdrehzahl zur Werkstückdrehzahl entspricht dabei typischerweise dem Verhältnis von Werkstückradius zum Werkzeugradius. Auf diese Art und Weise kann in Bezug auf die Umfangsrichtung der Mantelfläche ein im Wesentlichen schlupffreier wechselseitiger spanabhebender Eingriff von Werkstück und Werkzeug erzielt werden.

Bei weiteren Ausführungsformen kann aber auch ein gewisser Schlupf oder eine entsprechende Schneidwirkung vorgesehen sein. Das Verhältnis von Werkzeugdrehzahl zur Werkstückdrehzahl kann insoweit vom Verhältnis von Werkstückradius zum Werkzeugradius abweichen. Typischerweise verhält sich das Verhältnis von Werkzeugdrehzahl zur Werkstückdrehzahl proportional zum Verhältnis von Werkstückradius zum Werkzeugradius.

Nach einem weiteren Aspekt ist schließlich ein Bearbeitungswerkzeug für eine zuvor beschriebene Bearbeitungsvorrichtung vorgesehen. Das Bearbeitungswerkzeug weist einen sich parallel zur Werkzeugdrehachse erstreckenden Schaft und zumindest eine in einem vorgegebenen radialen Abstand zum Schaft erstreckende und sich zumindest abschnittsweise tangential zur Längsrichtung des Schafts erstreckende Schneide auf.

Das Bearbeitungswerkzeug kann dabei insbesondere eine ringförmige oder kreisförmige Schneide aufweisen, deren gedachter Mittelpunkt mit dem Mittelpunkt des Schafts, mithin mit der Werkzeugdrehachse zusammenfällt.

Nach einer weiteren Ausgestaltung kann das Bearbeitungswerkzeug in Längsrichtung der Werkzeugdrehachse, bzw. in Längsrichtung des Schafts betrachtet eine erste Stirnfläche aufweisen, deren Außenrand mit der ersten Schneide zusammenfällt.

Nach einer weiteren Ausgestaltung kann das Bearbeitungswerkzeug in Längsrichtung der Werkzeugdrehachse, bzw. in Längsrichtung des Schafts betrachtet eine zweite Stirnfläche aufweisen, die der erste Stirnfläche abgewandt ist und deren Außenrand mit einer zweiten Schneide zusammenfällt.

Nach einer weiteren Ausgestaltung des Bearbeitungswerkzeugs kann die Schneide in Bezug auf die Werkzeugdrehachse in Umfangsrichtung ununterbrochen ausgestaltet sein. Sie kann eine ebene und im Wesentlichen radial erhebungsfreie Außenkontur aufweisen. Insoweit eignet sich das Bearbeitungswerkzeug zur spanabhebenden Bearbeitung einer rotationssymmetrischen ebenen Mantelfläche des Werkstücks. Es kann sich dabei um eine innenliegende oder außenliegende Mantelfläche des Werkstücks handeln.

Nach einer weiteren Ausführungsform kann die Schneide des Bearbeitungswerkzeugs in Umfangsrichtung betrachtet zumindest eine spanbrechende Kerbe oder Nut aufweisen.

Insbesondere ist das Bearbeitungswerkzeug zur lösbaren Anordnung an einer zuvor beschriebenen Bearbeitungsvorrichtung vorgesehen und ausgebildet. Insoweit gelten sämtliche zuvor beschriebenen Merkmale, Eigenschaften und Wirkungen, wie sie im Zusammenhang mit der Bearbeitungsvorrichtung bereits beschrieben wurden auch gleichermaßen für das Bearbeitungswerkzeug; und umgekehrt.

Nach einem weiteren Aspekt betrifft die vorliegende Erfindung ferner ein Verfahren zur spanabhebenden Bearbeitung eines Werkstücks. Hierbei wird ein spanabhebendes Bearbeitungswerkzeug um eine Werkzeugdrehachse rotierend angetrieben. Das Bearbeitungswerkzeug weist dabei eine sich zumindest abschnittsweise tangential zur Werkzeugdrehachse erstreckende und um die Werkstückdrehachse rotierende Schneide auf. Ferner wird ein rotationssymmetrisches Werkstück mit einer Mantelfläche um eine Werkstückdrehachse rotierend angetrieben.

Die Werkzeugdrehachse ist dabei unter einem vorgegebenen Achskreuzwinkel relativ zur Werkstückdrehachse ausgerichtet. Insbesondere verlaufen die Werkstückdrehachse und die Werkzeugdrehachse windschief zueinander. Sie schließen einen von Null abweichenden Achskreuzwinkel ein. Ferner sind die Werkstückdrehachse und die Werkzeugdrehachse in einem vorgegebenen Abstand zueinander angeordnet, bzw. ausgerichtet. Es wird schließlich die rotierende Schneide des Bearbeitungswerkzeugs spanabhebend mit der rotierenden Mantelfläche des Werkstücks in Eingriff gebracht.

Das Verfahren zur spanabhebenden Bearbeitung ist insbesondere mit einer zuvor beschriebenen Bearbeitungsvorrichtung umsetzbar und durchführbar. Insoweit gelten sämtliche zuvor im Zusammenhang mit der Vorrichtung beschriebenen Merkmale, Vorteile und Wirkungen gleichermaßen auch für das Verfahren zur spanabhebenden Bearbeitung; und umgekehrt.

Das spanabhebenden Bearbeitungswerkzeug wird typischerweise mittels der zuvor beschriebenen Werkzeugspindel um die Werkzeugdrehachse gedreht. Das Werkstück wird typischerweise mit der Werkstückspindel um die Werkstückdrehachse gedreht. Das Verfahren ist insbesondere mittels der Steuerung der Bearbeitungsvorrichtung umsetzbar. Es ist insbesondere programmgesteuert umsetzbar, sodass die um die Werkstückachse rotierende Schneide die um die Werkstückachse rotierende Mantelfläche spanabhebend bearbeiten kann.

Nach einem weiteren Aspekt ist ferner ein Computerprogramm oder Computerprogrammprodukt vorgesehen. Dieses umfasst Befehle, die bei der Ausführung des Programms durch eine zuvor beschriebene Steuerung der zuvor beschriebenen Bearbeitungsvorrichtung diese veranlassen das zuvor beschriebene Verfahren zur spanabhebenden Bearbeitung des Werkstücks durchzuführen. Insoweit gelten sämtliche zuvor beschriebenen Merkmale, Effekte Vorteile und Wirkungen, wie sie zuvor in Bezug auf die Vorrichtung, das Bearbeitungswerkzeug oder das Verfahren beschrieben wurden auch gleichermaßen für das Computerprogramm oder Computerprogrammprodukt. Das Computerprogramm kann als herunterladbare Software oder auch als Datenträger vorliegen.

Weitere Ziele, Merkmale sowie Vorteile der vorliegenden Erfindung werden nachfolgend unter Bezugnahme auf die Zeichnungen erläutert. Hierbei bilden nicht nur die explizit in den Zeichnungen illustrierten und konkret beschriebenen sondern auch sämtliche sinnvoll und technisch miteinander kombinierbaren Merkmale den Gegenstand der vorliegenden Erfindung. Hierbei zeigen:
- Fig. 1: eine schematische Darstellung der spanabhebenden Bearbeitung des Werkstücks mit einem Bearbeitungswerkzeug, wobei eine innenliegenden Mantelfläche des Werkstücks bearbeitet wird,
- Fig. 2: eine schematische Darstellung einer weiteren Konfiguration der spanabhebenden Bearbeitung des Werkstücks, wobei eine außenliegende Mantelfläche des Werkstücks bearbeitet wird,
- Fig. 3: eine isolierte schematische perspektivische Darstellung des Bearbeitungswerkzeugs,
- Fig. 4: ein weiteres Ausführungsbeispiel eines Bearbeitungswerkzeugs,
- Fig. 5: eine weitere Konfiguration von Werkstück und Werkzeug zur Bearbeitung einer außenliegenden, etwa konisch ausgestalteten Mantelfläche des Werkstücks und
- Fig. 6: eine schematische Darstellung der Vorrichtung zur spanabhebenden Bearbeitung des Werkstücks.

### Detaillierte Beschreibung

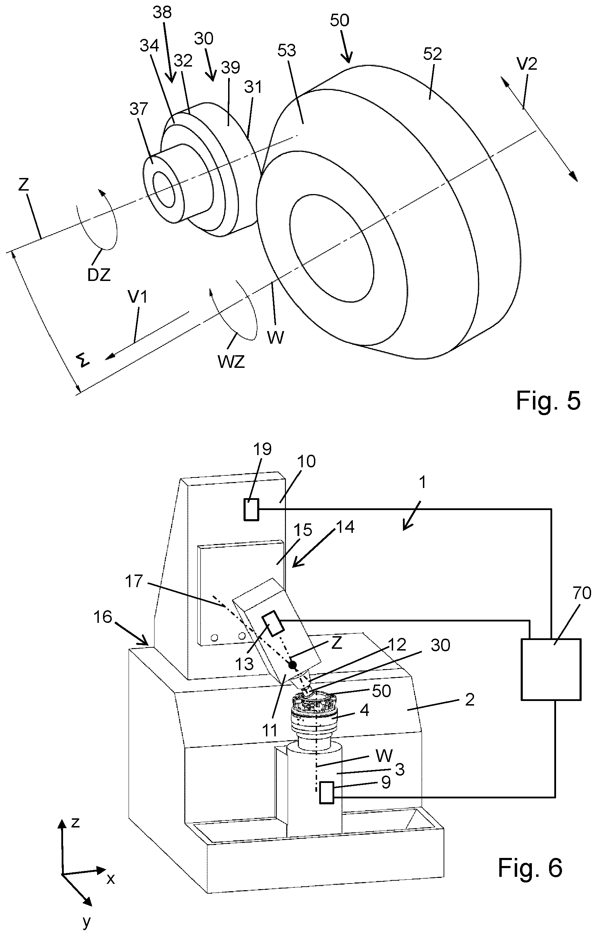

In Fig. 6 ist eine Ausführungsform einer erfindungsgemäßen Vorrichtung 1 zur Verzahnung eines Werkstücks 5 gezeigt. Die Vorrichtung 1 ist als spanabhende Bearbeitungsvorrichtung ausgestaltet. Sie weist eine Basis 2 und einen Werkstückträger 3 auf. Der Werkstückträger 3 ist an der ortsfesten Basis 2 angeordnet. An dem Werkstückträger 3 ist eine Werkstückspindel 4 drehbar angeordnet. Die Werkstückspindel 4 ist bezüglich einer Werkstückdrehachse W drehbar, insbesondere mittels eines Antriebs, etwa eines Spindelantriebs 9 drehbar antreibbar. Der Spindelantriebe 9 ist typischerweise mit einer Steuerung 70 signaltechnisch gekoppelt. Hierdurch kann die Werkstückspindel 4 kontrolliert und regelbar gedreht werden. An der Werkstückspindel 4 ist ein Werkstück 50 lösbar befestigbar, bzw. einspannbar. Mittels der drehbaren Lagerung der Werkstückspindel 4 kann das Werkstück 50 bezüglich der ersten Werkstückdrehachse W für die Zwecke der spanenden Werkstückbearbeitung gedreht werden.

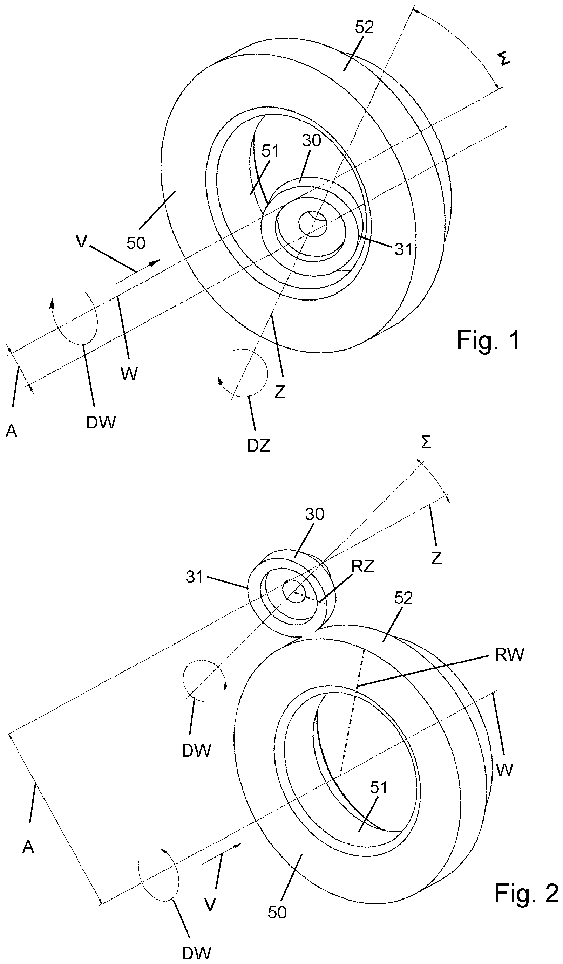

Die Vorrichtung 1 weist ferner einen Bearbeitungskopf 11 auf. An dem Bearbeitungskopf 11 ist eine Werkzeugspindel 12 bezüglich einer Werkzeugdrehachse Z drehbar gelagert. Die Werkzeugspindel 12 dient der lösbaren Aufnahme entsprechender Bearbeitungswerkzeuge 30 wie diese beispielsweise im Detail in den Fig. 1 bis 5 gezeigt sind.

Der Bearbeitungskopf 11 kann zur Durchführung einer spanabhebenden Bearbeitung einer äußeren oder inneren Mantelfläche 51, 52, 53 des Werkstücks 50 ausgebildet sein. Der Bearbeitungskopf 11, mithin das daran drehbar angeordnete Bearbeitungswerkzeug 30, kann hinsichtlich seiner Position und/oder Ausrichtung von der Steuerung 70 kontrolliert und vorzugsweise stufenlos verstellbar angesteuert werden. Der Bearbeitungskopf 11 ist grundsätzlich frei und stufenlos positionierbar sowie hinsichtlich mehrerer Bewegungsfreiheitsgrade relativ zur Werkstückdrehachse Z ausrichtbar.

Der Bearbeitungskopf 11 ist hierbei über eine Positioniereinrichtung 14 verschiebbar zumindest bezüglich einer ersten Richtung (x) an einem Träger 10 gelagert. Der Träger 10 selbst ist typischerweise über eine weitere Positioniereinrichtung 16, z.B. entlang einer weiteren Richtung (y) an der Basis 2 gelagert. Die genannten Positioniereinrichtungen 14, 16 können insbesondere mit einem Antrieb, typischerweise mit einem elektrischen Antrieb versehen sein, mittels welchem der Träger 10 als auch die Positioniereinrichtungen 14 und damit der Bearbeitungskopf 11 unabhängig voneinander relativ zur Basis 2 entlang einer oder mehrerer Richtungen (x, y, z) mittels der Steuerung 70 bewegt werden können.

Die Steuerung 70 ist insbesondere mit den genannten elektrischen Antrieben gekoppelt, um eine entsprechend geforderte Bewegung oder Ausrichtung des Bearbeitungskopfs 11 relativ zur Basis 2, insbesondere relativ zum an der Werkstückspindel 4 gelagerten Werkstück 30 zu verwirklichen. Die Positioniereinrichtungen 14, 16 können eine ein oder zweidimensionale Schiebeführung aufweisen, mittels welchen der Träger 10 und/oder der Bearbeitungskopf 11 entlang einer oder mehrerer Freiheitsgrade (x, y, z) bewegt werden können.

Insbesondere kann der Bearbeitungskopf 11 mittels der Positioniereinrichtung 14 bezüglich einer ersten Richtung, (x) und bezüglich einer dritten Richtung (z) längsverschieblich am Träger 10 gelagert sein. Die Positioniereinrichtung 14 kann hierbei jeweils einen, beispielsweise am Träger 10 angeordneten Schlitten 15 aufweisen. Der Schlitten 15 kann als Kreuzschlitten implementiert oder ausgebildet sein, sodass der Bearbeitungskopf 11 bezüglich der ersten Richtung (x) und optional auch bezüglich der dritten Richtung (z) verfahrbar, bzw. verschiebbar am Träger 10 gelagert ist. Der Träger 10 kann daselbst mittels der Positioniereinrichtung 16 etwa entlang der zweiten Richtung (y) relativ zur Basis 2 bedarfsgerecht bewegt, bzw. positioniert werden.

Eine signaltechnische Verbindung zwischen der zentralen Steuerung 70 mit dem Positioniereinrichtungen 14, 16 ist vorliegend nicht explizit dargestellt. Aus Gründen der Übersichtlichkeit ist auch der wechselseitige Eingriff von Führungsschienen etwa des Schlittens 15 der Positioniereinrichtungen 14, 16 nicht explizit gezeigt.

Der Bearbeitungskopf 11 ist ferner bezüglich einer ersten Schwenkachse 17 drehbar, bzw. schwenkbar an dem Träger 10 und damit auch relativ zur Basis 2 verschwenkbar gelagert. Mittels der drehbaren, bzw. schwenkbaren Lagerung bezüglich der Schwenkachse 17 kann die Werkzeugdrehachse Z relativ zur Werkstückachse W variabel und bedarfsgerecht verändert und eingestellt werden.

Dies ermöglicht letztlich eine freie Positionierbarkeit und Ausrichtbarkeit des Bearbeitungskopfs 11, und damit auch des Bearbeitungswerkzeugs 30 relativ zur Basis 2, insbesondere relativ zum drehbar an der Basis gelagerten Werkstück 50. Die Schwenkachse 17 ist typischerweise mit einem eigenen Antrieb versehen, welcher signaltechnisch mit der Steuerung 70 verbunden ist. Eine Dreh- bzw. Schwenkbewegung des Bearbeitungskopf 11 kann insoweit von der Steuerung 70 kontrolliert werden.

Stellvertretend für die Vielzahl möglicher Antriebe ist in Fig. 6 lediglich eine Antriebseinheit 19 des Bearbeitungskopf 11 dargestellt, die signaltechnisch mit der Steuerung 70 verbunden ist. Die Antriebseinheit 19 steht stellvertretend für sämtliche Antriebe des Trägers 10 sowie des Bearbeitungskopfs 11, um diese in jedwede geforderte Position oder Ausrichtung zu überführen und/oder mit geforderten Geschwindigkeiten während des Bearbeitungsprozesses zu bewegen.

Auch die Spindelantriebe 9, 13 sind signalübertragend mit der Steuerung 70 verbunden. Die Steuerung 70 kann somit die Drehzahlen der Werkstückspindel 4 und der Werkzeugspindel 12 bedarfsgerecht regeln und steuern.

In den Figuren 1 und 2 ist der wechselseitige Eingriff des Bearbeitungswerkzeugs 30 mit einer Mantelfläche 51, 52 des Werkstücks 50 detailliert gezeigt. Das Werkstück 50 ist bezüglich der Werkstückdrehachse W drehbar gelagert. Das Bearbeitungswerkzeug 30 ist bezüglich einer Werkzeugdrehachse Z drehbar gelagert. Die Werkzeugdrehachse Z ist in einem vorgegebenen Achsabstand A zur Werkstückdrehachse W angeordnet. Der Abstand A ist durch den Radius der zu bearbeitenden Mantelfläche 51, 52 als auch durch den Radius des Bearbeitungswerkzeugs 30 vorgegebenen.

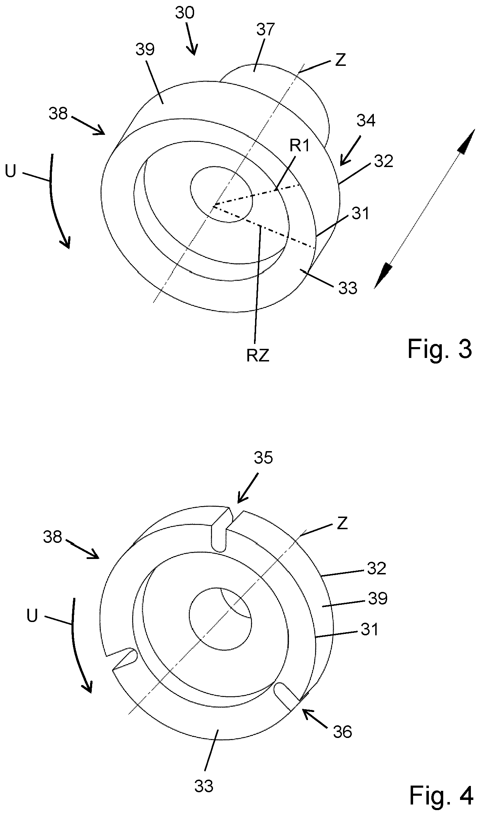

Das in den Figuren 3 und 4 isoliert gezeigte Bearbeitungswerkzeug 30 weist eine erste Schneide 31 und eine zweite Schneide 32 auf. Die Schneiden 31, 32 erstrecken sich zumindest abschnittsweise tangential zur Werkzeugdrehachse Z, die mit einer Längsachse des in Fig. 3 gezeigten Schafts 37 des Bearbeitungswerkzeugs 30 zusammenfällt. Wenn das Werkzeug 30 bestimmungsgemäß an der Werkzeugspindel 12 gehalten oder befestigt ist, fällt die Längsachse des Schafts 37 mit der Werkzeugdrehachse Z zusammen.

Das Bearbeitungswerkzeug 30 weist einen gegenüber dem längserstreckten Schaft 37 radial erweiterten Kopf 38 auf. Der Kopf 38 weist eine dem Schaft 37 abgewandte distale Stirnfläche 33 und eine der distalen Stirnfläche 33 abgewandte proximale Stirnfläche 34 auf. Zwischen den Stirnfläche 33, 34 erstreckt sich eine vorliegend zylindrisch ausgestaltete Mantelfläche 39. Diese verläuft im Wesentlichen parallel zur Werkzeugdrehachse Z. Bei anderen Ausführungsformen kann die Mantelfläche 39 auch unter einem Winkel relativ zur Längsachse des Bearbeitungswerkzeugs 30 verlaufen. Im Übergang zwischen der seitlichen Mantelfläche 39 und der distalen oder ersten Stirnfläche 33 ist eine umlaufende kreisförmige Schneide 31 gebildet, welche vorliegend als erste Schneide bezeichnet ist. Gegenüberliegend und im Übergang von der Mantelfläche 39 in die proximale oder zweite Stirnfläche 34 ist eine zweite umlaufende Schneide 32 gebildet.

Die Schneiden 31, 32 verlaufen in einer sich senkrecht zur Längserstreckung des Schafts 37 erstreckenden Ebene. Sie sind typischerweise frei von Verzahnungen und weisen keinerlei radiale Erhebungen auf. Die Schneiden 31, 32 bewirken einen gleichmäßig schälenden, bzw. schneidenden spanabhebenden Abtrag von der außenliegenden oder innenliegenden Mantelfläche 51, 52 des zu bearbeitenden Werkstücks 50.

Bei der in den Figuren 3 und 5 gezeigten Darstellung des Bearbeitungswerkzeugs 30 ist der zweite Außenradius R2 der zweiten Schneide 32 in etwa gleich dem ersten Außenradius R1 der ersten Schneide 31. Dies bedingt eine im Wesentlichen zylindrische Mantelfläche 39. Bei anderen Ausgestaltungen des Bearbeitungswerkzeugs 30 können jene Radien R1, R2 auch unterschiedlich groß sein. Alsdann kann sich eine in etwa konisch oder anderweitig von der zylindrischen Form abweichende Mantelfläche 39 für das Bearbeitungswerkzeug ergeben. Bei einer solch von einer Zylinderfläche abweichen Form ergibt sich ein konstruktiver Freiwinkel wenn etwa die Schneide 31 unter einem vorgegebenen Achskreuzwinkel Σ mit der zu bearbeitenden Mantelfläche 51, 52, 53 spanabhebend in Eingriff gelangt.

Für die spanabhebenden Bearbeitung des rotierenden Werkstück 50 ist insbesondere vorgesehen, dass das mit seiner ununterbrochenen und typischerweise umlaufenden Schneide 31, 32 ausgestaltete Bearbeitungswerkzeug 30 spanabhebend mit der ebenfalls rotierenden Mantelfläche 51, 52, 53 des Werkstücks 50 in Eingriff gelangt. Während der Bearbeitung ist ferner vorgesehen, dass das Bearbeitungswerkzeug bei einer zylindrisch ausgestaltete Mantelfläche 51, 52 entlang einer Vorschubrichtung V relativ zum Werkstück 50 bewegt wird. Die Vorschubrichtung V erstreckt sich hierbei parallel zur Werkstückdrehachse W. Auf diese Art und Weise fährt das rotierende Bearbeitungswerkzeug 30 in Längsrichtung, d.h. in Axialrichtung an der rotierenden Mantelfläche 51, 52, 53 entlang.

Im Unterschied zu einer rein drehenden spanabhebenden Bearbeitung mit einem Drehmeißel rotiert das hier vorgesehene Bearbeitungswerkzeug 30 um seine Werkzeugdrehachse Z, sodass bei der fortwährenden Bearbeitung der Mantelfläche 51, 52, 53 in aufeinanderfolgenden Momenten oder Zeitpunkten der Bearbeitung jeweils in Umfangsrichtung der Schneide 31 aneinander angrenzende Schneidensegmente mit der zu bearbeitenden Mantelfläche 51, 52, 53 in Eingriff gelangen. Auf diese Art und Weise kann eine effektive Schneidenlänge auf den Umfang der ringförmigen Schneide 31, 32 vergrößert werden. Eine mechanische Beanspruchung als auch thermische Beanspruchung des Bearbeitungswerkzeugs 30 verteilt sich somit auf den gesamten Außenumfang der Schneide, 31, 32, mithin auf die gesamte Schneidkante.

Ist beispielsweise die erste Schneide 31 verschlissen kann das Bearbeitungswerkzeug 30 gegebenenfalls anderweitig eingespannt oder es kann der Bearbeitungskopf 11 entsprechend angesteuert oder ausgerichtet werden, dass nachfolgend lediglich die zweite Schneide 32 in ähnlicher oder identische Art und Weise wie zuvor die erste Schneide 31 mit der zu bearbeitenden Mantelfläche 51, 52, 53 spanabhebend in Eingriff gelangt.

Bei der Ausgestaltung eines Bearbeitungswerkzeugs gemäß Fig. 4 sind die Schneiden 31, 32 ebenfalls im Wesentlichen kreisförmig und ununterbrochen ausgestaltet. Es sind hierbei ferner einzelne spanbrechende Kerben oder Nuten 35, 36 im Bereich der Schneiden 31, 32, etwa entlang dem Außenumfang des Kopfs 38 des Bearbeitungswerkzeugs 30 vorgesehen. Der Abstand der einzelnen Nuten 35, 36 in Umfangsrichtung U definiert die Länge der abzutragenden Späne.

Die bahnbrechenden Kerben oder Nuten 35, 36 können sich durchgängig von der ersten Schneide 31 bis zur zweiten Schneide 32 erstrecken. Es ist aber auch denkbar, dass die erste Schneide 31 und die zweite Schneide 32 jeweils unterschiedliche Kerben oder Nuten 35, 36 aufweisen, die in Umfangsrichtung U versetzt zueinander an den jeweiligen Schneiden 31, 32 ausgebildet sind.

Für die Bearbeitung einer innenliegenden Mantelfläche 50, wie dies in Fig. 1 dargestellt ist, steht die von der Schneide 31 gebildete Außenkante des Kopfs 38 des Bearbeitungswerkzeugs 30 mit der innenliegenden und somit quasi hohlzylindrischen Mantelfläche 51 des Werkstücks 50 in Eingriff. Es ist hierbei vorgesehen, dass das Bearbeitungswerkzeug 30 und das Werkstück 50 gleichläufig rotierend angetrieben werden.

Bei der weiteren Konfiguration gemäß Fig. 2, bei welcher das Bearbeitungswerkzeug 30 eine außenliegende Mantelfläche 52 des Werkstücks 50 bearbeitet, ist ein gegenläufiges Rotieren von Bearbeitungswerkzeug 30 und Werkstück 50 vorgesehen. In beiden Fällen kann die Steuerung 70 dazu ausgestaltet sein, die Werkstückspindel 4 und die Werkzeugspindel 12 und damit sowohl das Werkstück 50 alsauch das Bearbeitungswerkzeug 30 derart anzusteuern, dass das Verhältnis von Werkzeugdrehzahl DZ zur Werkstückdrehzahl DW dem Verhältnis von Werkstückradius RD zum Werkzeugradius RZ entspricht, sodass folgender Zusammenhang gilt: DZ/DW = RW/RZ.

Der Werkzeugradius RZ definiert den radialen Abstand zwischen der Schneide 31 und der Werkzeugdrehachse Z. Der Werkstückradius RW definiert den radialen Abstand zwischen der Mantelfläche 51, 52 zur Werkstückdrehachse W.

Wenn das Verhältnis von Werkzeugdrehzahl DZ zur Werkstückdrehzahl DW dem Verhältnis von Werkstückradius RW zum Werkzeugradius RZ entspricht kann das Bearbeitungswerkzeug 30 zumindest im Hinblick auf die Drehbewegung des Werkstücks 50, bzw. in Bezug auf die Umfangsrichtung des Werkstücks quasi schlupffrei mit diesem in Eingriff stehen. Ein spanabhebender Materialabtrag ergibt sich dabei überwiegend oder ausschließlich durch die Axialkomponente der Schneidbewegung des Bearbeitungswerkzeugs 30 relativ zur Mantelfläche 51, 52, 53. Auf diese Art und Weise kann die Materialbeanspruchung für das Bearbeitungswerkzeug weiter reduziert werden. Reibung zwischen dem Bearbeitungswerkzeug und der zu bearbeitenden Mantelfläche kann in vorteilhafter Weise ebenfalls reduziert werden.

In Fig. 5 ist schließlich ein weiteres Ausführungsbeispiel gezeigt, bei welchem das Bearbeitungswerkzeug 30 mit seiner ersten Schneide 31 mit einer kegelförmigen oder konisch geformten Mantelfläche 53 des Werkstücks 50 spanabhebend in Eingriff steht. Prinzipiell entspricht diese Konfiguration etwa derjenigen, wie sie bereits in Fig. 2 beschrieben und erläutert wurde. Das Bearbeitungswerkzeug 30 und das Werkstück 50 werden hierbei gegenläufig bezüglich der Werkzeugdrehachse Z und bezüglich der Werkstückachse W angetrieben. Die Vorschubrichtung V für das Bearbeitungswerkzeug erstreckt sich hierbei jedoch nicht mehr parallel zur Werkstückdrehachse W sondern weist zwei Richtungskomponente V1 und V2 auf, die der Kontur der Mantelfläche 53 folgen oder entsprechen. Bei einer etwa konisch geformten Mantelfläche wird das Bearbeitungswerkzeug 30 etwa konstant sowohl in Radialrichtung V2 zugestellt als auch in Axialrichtung V1 bewegt.

Der Achskreuzwinkel Σ zwischen der Werkzeugdrehachse Z und der Werkstückdrehachse W kann zwischen 5° und 40° betragen. Er kann bei weiteren Ausführungsformen auch mindestens 10° oder höchstens 35° betragen. Das Bearbeitungswerkzeug 30 kann zumindest im Bereich seiner Schneiden 31, 32 oder Schneidkanten ein Hartmetall aufweisen oder einen pulvermetallurgisches erzeugten Schnellarbeitsstrahl aufweisen oder aus solchen Materialien im Wesentlichen bestehen.

### Bezugszeichenliste

- 1: Bearbeitungsvorrichtung
- 2: Basis
- 3: Werkstückträger
- 4: Werkstückspindel
- 9: Spindelantrieb
- 10: Träger
- 11: Bearbeitungskopf
- 12: Werkzeugspindel
- 13: Spindelantrieb
- 14: Positioniereinrichtung
- 15: Schlitten
- 16: Positioniereinrichtung
- 17: Schwenkachse
- 18: Werkzeugachse
- 19: Antriebseinheit
- 30: Bearbeitungswerkzeug
- 31: Schneide
- 32: Schneide
- 33: Stirnfläche
- 34: Stirnfläche
- 35: Nut
- 36: Nut
- 37: Schaft
- 38: Kopf
- 39: Mantelfläche
- 50: Werkstück
- 51: Mantelfläche
- 52: Mantelfläche
- 53: Mantelfläche
- 70: Steuerung
- A: Achsabstand
- DW: Werkstückdrehzahl
- DZ: Werkzeugdrehzahl
- RW: Werkstückradius
- RZ: Werkzeugradius
- V: Vorschubrichtung
- U: Umfangsrichtung
- W: Werkstückdrehachse
- Z: Werkzeugdrehachse
- Σ: Achskreuzwinkel
- R1, R2: Radius

## Patentansprüche

1. Vorrichtung zur spanabhebenden Bearbeitung eines Werkstücks (50), mit:
- einer Werkzeugspindel (12) zur Aufnahme und drehbaren Lagerung eines spanabhebenden Bearbeitungswerkzeugs (30) um eine Werkzeugdrehachse (Z),
- einer Werkstückspindel (4) zur Aufnahme und drehbaren Lagerung eines rotationssymmetrischen Werkstücks (50) um eine Werkstückdrehachse (W),
- wobei die Werkzeugdrehachse (Z) unter einem vorgegebenen Achskreuzwinkel (Σ) relativ zur Werkstückdrehachse (W) ausrichtbar ist,
- einer mit der Werkzeugspindel (12) und der Werkstückspindel (4) gekoppelten Steuerung (70), welche dazu ausgestaltet ist, eine sich zumindest abschnittsweise tangential zur Werkzeugdrehachse (Z) erstreckende und um die Werkzeugdrehachse (Z) rotierende Schneide (31, 32) eines mittels der Werkzeugspindel (12) drehbar angetriebenen Bearbeitungswerkzeugs (30) mit einer sich um die Werkstückdrehachse (W) rotierenden Mantelfläche (51, 52, 53) des Werkstücks (50) spanabhebend in Eingriff zu bringen.

2. Vorrichtung nach Anspruch 1, wobei das Bearbeitungswerkzeug (30) eine ringförmige oder kreisförmige Schneide (31, 32) aufweist, deren gedachter Mittelpunkt mit der Werkzeugdrehachse (Z) zusammenfällt.

3. Vorrichtung nach einem der vorhergehenden Ansprüche, wobei das Bearbeitungswerkzeug (30) in Längsrichtung der Werkzeugdrehachse (Z) betrachtet eine erste Stirnfläche (33) aufweist, deren Außenrand mit einer ersten Schneide (31) zusammenfällt.

4. Vorrichtung nach Anspruch 3, wobei das Bearbeitungswerkzeug (30) in Längsrichtung der Werkzeugdrehachse (Z) betrachtet eine zweite Stirnfläche (34) aufweist, die der ersten Stirnfläche (33) abgewandt ist und deren Außenrand mit einer zweiten Schneide (32) zusammenfällt.

5. Vorrichtung nach Anspruch 3 und 4, wobei die erste Schneide (31) ausgehend von der Werkzeugdrehachse (Z) einen ersten Radius (R1) aufweist, wobei die zweite Schneide (32) ausgehend von der Werkzeugdrehachse (Z) einen zweiten Radius (R 2) aufweist und wobei der erste Radius (R1) und der zweite Radius (R2) unterschiedlich oder im Wesentlichen gleich groß sind.

6. Vorrichtung nach einem der vorhergehenden Ansprüche, wobei die Schneide (31, 32) des Bearbeitungswerkzeugs (30) in Bezug auf die Werkzeugdrehachse (Z) in Umfangsrichtung (U) ununterbrochen ausgestaltet ist.

7. Vorrichtung nach einem der vorhergehenden Ansprüche 1 bis 5, wobei die Schneide (31, 32) des Bearbeitungswerkzeug (30) in Umfangsrichtung betrachtet zumindest eine spanbrechende Kerbe oder Nut (35, 36) aufweist.

8. Vorrichtung nach einem der vorhergehenden Ansprüche, wobei die Steuerung (70) dazu ausgestaltet ist, das Bearbeitungswerkzeug (30) während seines drehenden und spanabhebenden Eingriffs mit der Mantelfläche (51, 52, 53) des Werkstücks (50) entlang einer Vorschubrichtung (V) relativ zum sich drehenden Werkstück (50) zu bewegen, wobei die Vorschubrichtung (V) eine Richtungskomponente aufweist, die sich parallel zur Werkstückdrehachse (W) erstreckt.

9. Vorrichtung nach einem der vorhergehenden Ansprüche, wobei die Steuerung (70) dazu ausgestaltet ist, das Bearbeitungswerkzeug (30) mit einer außenliegenden Mantelfläche (52, 53) des Werkstücks (50) in Eingriff zu bringen und dabei die Werkstückspindel (4) gegenläufig zur Werkzeugspindel (12) rotierend anzutreiben.

10. Vorrichtung nach einem der vorhergehenden Ansprüche, wobei die Steuerung (70) dazu ausgestaltet ist, das Bearbeitungswerkzeug (30) mit einer innenliegenden Mantelfläche (51) des Werkstücks (50) in Eingriff zu bringen und dabei die Werkstückspindel (4) gleichläufig zur Werkzeugspindel (12) rotierend anzutreiben.

11. Vorrichtung nach einem der vorhergehenden Ansprüche, wobei die rotierende Schneide (31, 32) um einen Werkzeugradius (RZ) von der Werkzeugdrehachse (Z) entfernt ist und wobei die rotierende Mantelfläche (51, 52, 53) um einen Werkstückradius (RW) von der Werkstückdrehachse (W) entfernt ist und wobei die Steuerung (70) dazu ausgestaltet ist, die Werkstückspindel (4) mit einer Werkstückdrehzahl (DW) rotierend anzutreiben und die Werkzeugspindel (12) mit einer Werkzeugdrehzahl (DZ) rotierend anzutreiben, wobei das Verhältnis von Werkzeugdrehzahl (DZ) zur Werkstückdrehzahl (WZ) dem Verhältnis von Werkstückradius(RW) zum Werkzeugradius(RZ) entspricht.

12. Bearbeitungswerkzeug (30) für eine Vorrichtung nach einem der vorhergehenden Ansprüche, wobei das Bearbeitungswerkzeug (30) einen sich parallel zur Werkzeugdrehachse (Z) erstreckenden Schaft (37) und zumindest eine in einem vorgegebenen radialen Abstand zum Schaft (37) erstreckende und sich zumindest abschnittsweise tangential zur Längsrichtung des Schafts (37) erstreckende Schneide (31, 32) aufweist.

13. Bearbeitungswerkzeug (30) nach Anspruch 12, wobei die Schneide (31, 32) eine ringförmige oder kreisförmige Geometrie aufweist, deren gedachter Mittelpunkt mit einer Längsachse des Schafts (37) zusammenfällt.

14. Verfahren zur spanabhebenden Bearbeitung eines Werkstücks (50),
- bei welchem ein spanabhebenden Bearbeitungswerkzeug (30) um eine Werkzeugdrehachse (Z) rotierend angetrieben wird, wobei das Bearbeitungswerkzeug (30) eine sich zumindest abschnittsweise tangential zur Werkzeugdrehachse (Z) erstreckende und um die Werkzeugdrehachse (Z) rotierende Schneide (31, 32) aufweist,
- bei welchem ein rotationssymmetrisches Werkstück (50) mit einer Mantelfläche (51, 52, 53) um eine Werkstückdrehachse (W) rotierend angetrieben wird, wobei die Werkzeugdrehachse (Z) unter einem vorgegebenen Achskreuzwinkel (Σ) relativ zur Werkstückdrehachse (W) ausgerichtet wird, und
- wobei die rotierende Schneide (31, 32) des Bearbeitungswerkzeugs (30) spanabhebend mit der rotierenden Mantelfläche (51, 52, 53) des Werkstücks (50) in Eingriff gebracht wird.

15. Computerprogrammprodukt umfassend Befehle, die bei der Ausführung des Programms durch eine Steuerung (70) eine Vorrichtung (1) nach einem der vorhergehenden Ansprüche 1 bis 11 diese veranlassen, das Verfahren nach Anspruch 14 durchzuführen.
